# EUROPEAN PATENT APPLICATION

(11) **EP 2 043 330 A1**
(43) Date of publication of application: **01.04.2009**
(21) Application number: 07291182.9
(22) Date of filing: 28.09.2007
(51) Int. Cl.: H04L 29/08, H04L 29/06

(54) **Method of supporting a collaborative session**

(71) Applicant: Alcatel Lucent, 75008 Paris (FR)
(72) Inventor: Penet, Xavier, 67408 Illkirch (FR); Haeflinger, Patrick, 67408 Illkirch (FR); Daniel, Patrick, 67408 Illkirch (FR); Schmitt, Claude, 67408 Illkirch (FR)
(74) Representative: Zinsinger, Norbert

(57) **Abstract**

The invention concerns a method of supporting a collaborative session with two or more participants (21 to 26), and a collaborative scheduler to execute this method. The two or more participants (21 to 26) are subscribed to a telecommunications network, each of the participants (21 to 26) having available one or more different telecommunication devices. After a triggering action (801), the collaborative scheduler (1) receives identifiers of the participants (21 to 26) and identifiers of one or more collaborative applications (31, 32, 33) to be used in the collaborative session. The collaborative scheduler (1) sends a request (802) concerning an availability of the participants (21 to 26) to a presence server (5). In reply to said request (802), the collaborative scheduler (1) receives data specifying a respective telecommunication device for each of the participants (21 to 26). The collaborative scheduler (1) starts the identified collaborative applications (31, 32, 33) on the specified telecommunication devices of the participants (21 to 26).

## Description

The present invention relates to a method of supporting a collaborative session with two or more participants, and a collaborative scheduler to execute this method.

Participants of telecommunication networks use more and more different devices, e.g. a wire-line telephone, a mobile telephone, a laptop, a PC (= Personal Computer), a PDA (= Personal Digital Assistant), etc. At the same time, collaboration applications become more numerous. The purpose of real-time collaboration products is to approximate, as closely as possible, the experience of face-to-face among geographically dispersed co-workers.

Today, it is difficult to organise an efficient set-up of a collaborative work while taking into account this complex diversity. The set-up of a collaborative work session is mainly "manual" and requires several actions which need to be coordinated. In the current solutions, there is no easy availability of the participants' devices. Moreover, there is no way to get the information about availability of a meeting room at the beginning of a meeting since the system is still busy due to the previous session. Due to the various collaborative applications, the set-up becomes complex for each participant. And, the compatibility and inter-operability issues among the various devices, applications and/or device/application versions quickly become a nightmare.

It is the object of the present invention to improve the efficiency of collaborative work.

The object of the present invention is achieved by a method of supporting a collaborative session with two or more participants subscribed to a telecommunications network, each of the participants having available one or more different telecommunication devices, whereby the method comprises the steps of receiving by a collaborative scheduler, after a triggering action, identifiers of the participants and identifiers of one or more collaborative applications to be used in the collaborative session, sending, by the collaborative scheduler, a request concerning an availability of the participants to a presence server, receiving by the collaborative scheduler, in reply to said request, data specifying at least a respective telecommunication device for each of the participants from the presence server, and starting, by the collaborative scheduler, the identified collaborative applications on one or more specified telecommunication devices of the participants. Moreover, the object of the present invention is achieved by a collaborative scheduler for supporting a collaborative session with two or more participants subscribed to a telecommunications network, each of the participants having available one or more different telecommunication devices, wherein the collaborative scheduler comprises a control unit adapted to receive, after a triggering action, identifiers of the participants and identifiers of one or more collaborative applications to be used in the collaborative session, send a request concerning an availability of the participants to a presence server, receive, in reply to said request, data specifying at least a respective telecommunication device for each of the participants from the presence server, and start the identified collaborative applications on one or more specified telecommunication devices of the participants.

The present invention introduces the collaborative scheduler which controls the collaborative session, e.g., the set-up phase of the session and the launch of the necessary collaborative applications.

Thus, the present invention provides the advantage that the set-up phase of a collaborative session is automated by means of the collaborative scheduler.

Moreover, the present invention improves the efficiency of collaborative work by launching the necessary collaborative applications on the most appropriate device of each participant.

As soon as the participant has accepted to participate in a collaborative application, all the tedious set-up and launching of the appropriate application, depending on the participant's available and connected devices, is taken over by the collaborative scheduler. No time is lost to effectively set up the collaborative session at the right time: for present participants resources are ready.

At any moment, the participant is able to change his configuration and ask the scheduler to transfer the session to his new configuration. For example, the participant will first attend to the start of the meeting only in audio (being in his car), then the participant wants to switch to PC + IP phone as soon as he has reached his office (IP = Internet Protocol).

Further advantages are achieved by the embodiments of the invention indicated by the dependent claims.

According to a preferred embodiment of the invention, the collaborative scheduler receives information about a preferred capability of the participants' telecommunication devices from one or more of the collaborative applications. Preferably, the collaborative scheduler receives information whether the telecommunication devices of the participants should have video and/or audio capabilities. It is also possible that the information details a preferable resolution of a video output device, a preferable buffer volume, or a preferable RAM size or even a preferable OS to use (RAM = Random Access Memory; OS = Operating System). The information about preferable capabilities may be used to make sure that each of the participants has the best possible collaborative work experience. Dependent on said information, the collaborative scheduler specifies for each of the participants a telecommunications device to be used in the collaborative session. In particular, the collaborative scheduler selects for each of the participants a device from the one or more registered devices which has capabilities that match and are closest, respectively, to the preferred (ideal) capabilities.

According to another preferred embodiment of the invention, the collaborative scheduler receives a list which specifies the telecommunications devices available to each of the participants in an order of preference. In particular, the list details for each of the participants a device which is the most preferred device for the respective participant, a device which is second best for the respective participant, a device which is third best for the respective participant, etc. Based on said preference list, the collaborative scheduler selects an appropriate telecommunications device for the collaborative session for each respective participant. For example, the collaborative scheduler checks whether the capabilities of the most preferred device of a participant allow an execution of the collaborative session. If it does, the collaborative scheduler selects the most preferred device. Only if the execution of the collaborative session is impossible with the most preferred device, the collaborative scheduler changes to the second best device of a participant. Again, the collaborative scheduler checks whether the capabilities of the second best device of a participant allow an execution of the collaborative session, and so on.

According to another preferred embodiment of the invention, the collaborative scheduler allocates resources of the telecommunications network to a meeting room. The meeting room may be a room on the premises of an enterprise, a room in a convention centre or a hotel conference room. The meeting room may be assigned the status of a participant, and the activities going on in the meeting room may represent a part of or be used in the collaborative session. Preferably, the collaborative scheduler is provided with information about an availability of one or more devices in the meeting room whereby said one or more devices are to be used in the collaborative session. These devices may a multimedia overhead projector, a TV screen, a video projector, a loudspeaker system, etc. The collaborative scheduler may select one or more of the available devices of the meeting room for use in the collaborative session.

In a preferred embodiment, an appointment application comprises a time clock and/or a calendar where the schedule of the collaborative session is registered. When the start time of the collaborative session has arrived, the appointment application sends a notification message to the collaborative scheduler. The notification message is received by the collaborative scheduler and forwarded to the control unit of the collaborative scheduler. The control unit is triggered by the notification message to start the set-up of the collaborative session.

According to another preferred embodiment of the invention, the collaborative scheduler receives during an on-going collaborative session from one of the participants of the collaborative session a logoff message. The logoff message requests the collaborative scheduler to unsubscribe the requesting participant from one or more of the collaborative applications specified in the logoff message. Triggered by said logoff message, the collaborative scheduler terminates the one or more specified collaborative applications on the telecommunications device of the requesting participant.

Preferably, the collaborative scheduler transfers an on-going collaborative session from a first telecommunications device to a second telecommunications device of the participant. The transfer may be triggered by a transfer request which is issued by the participant and sent to the collaborative scheduler. The collaborative scheduler adjusts the operation of the one or more collaborative applications in correspondence with the change of the telecommunications device. For example, if the first telecommunications device of the participant has video and audio capability and the second telecommunications device of the participant has only audio capability, then the collaborative scheduler correspondingly adjusts the transmitted data to the respective telecommunications devices.

Preferably, the collaborative scheduler provides a session manager managing the exchange of data between the participants of the collaborative session with address information associated with one or more participants of the collaborative session. For example, a participant has not logged in at the presence server. In order to be included in the group of participants, the control unit of the collaborative scheduler feeds the session manager with address information, e.g., a phone number, associated with the participant of the collaborative session.

It is also possible that the control unit of the collaborative scheduler is adapted to integrate a remote participant. For example, a collaborative work session is organised by a group of participants who are connected to a network within an enterprise. It is also possible that the meeting room is on the premises of the enterprise. Therefore, the set-up and operation of the collaborative session is centred on the enterprise network. There may be a participant without access to the enterprise network, a so-called remote participant, e.g., a sales representative of the enterprise who is located far from the enterprise premises. Then, the collaborative scheduler is adapted to integrate a remote participant, preferably via a Virtual Private Network (= VPN).

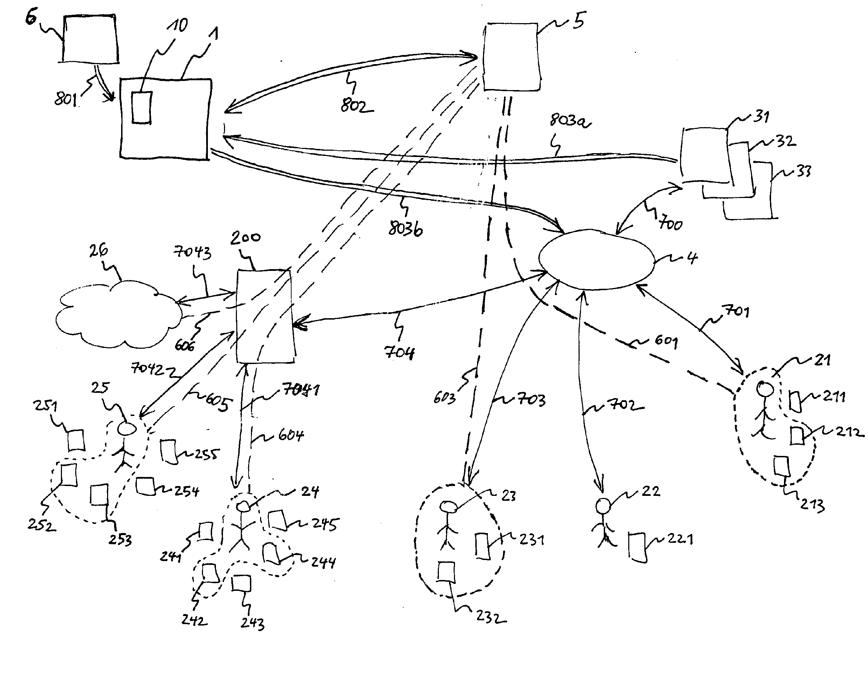

These as well as further features and advantages of the invention will be better appreciated by reading the following detailed description of presently preferred exemplary embodiments taken in conjunction with the accompanying figure, showing a block diagram of a collaborative session according to an embodiment of the invention.

The figure shows a telecommunication network comprising an appointment tool 6, a collaborative scheduler 1 with a control unit 10, an enterprise server 5, a session manager 4, and geographically dispersed participants 21 to 25 of a collaborative session with access to the telecommunication network. For example, the participants 21 to 25 are subscribers of the telecommunications network. The telecommunications network may comprise several sub-networks, e.g., a telephone network (PSTN = Public Switched Telephone Network), a wireless telephone network (GSM = Global System for Mobile Communications), and a packet-based multimedia network (Internet), each of the sub-networks connected to each other. Therefore, the telecommunications network can be accessed by means of a multitude of different types of telecommunications devices.

The collaborative scheduler 1 is composed of one or several interlinked computers, i.e., a hardware platform, a software platform based upon the hardware platform and several application programs executed by the system platform formed by the software and hardware platform. The functionalities of the collaborative scheduler 1 are provided by the execution of these application programs. The application programs or a selected part of these application programs constitute a computer software product providing a collaborative session service as described in the following, when executed on the system platform. Further, such computer software product is constituted by a storage medium storing these application programs or said selected part of application programs.

Each of the participants 21 to 25 is associated with one or more telecommunication devices. The first participant 21 is at home and is associated with a PDA 211, a laptop 212, and a wireline telephone 213. The second participant 22 is walking somewhere in downtown and associated with a mobile telephone 221. The third participant 23 is travelling with a car and is associated with a PDA 231 and a mobile telephone 232. The fourth participant 24 is in his office on premises 200 of an enterprise organising the collaborative session and is associated with a mobile telephone 241, a wireline telephone 242, a PC 243, a laptop 244, and a PDA 245. The fifth participant 25 is in his office on the enterprise premises 200 and is associated with a mobile telephone 251, a wireline telephone 252, a PC 253, a laptop 254, and a PDA 255.

There is a meeting room with specific meeting room resources on the enterprise premises 200. This meeting room is treated as a virtual participant 26 of the collaborative session.

As a pre-requisite of the present invention, the complete organisation (schedule, participants, agenda, etc.) of the collaborative session has already been performed, and all participants 21 to 26 have acknowledged the time schedule for the collaborative session.

For example, a calendar of an appointment tool 6 triggers 801 the start of the action and provides the collaborative scheduler 1 with relevant information to set up the session. This relevant information may comprise, e.g., identifiers of the participants of the collaborative session, identifiers of the participants of the meeting room (seen as a virtual participant 26) and identifiers of one or more collaborative applications to be used in the collaborative session, e.g., the preferred type and/or version of the collaborative applications.

Triggered by the calendar-driven appointment tool 6, the collaborative scheduler 1 then starts to set-up and launch the one or more defined applications on the participants' best available/suited devices, as described in the following.

The collaborative scheduler 1 checks the availability of the participants 21 to 26 by sending a request 802 concerning availability of the participants 21 to 26 to the enterprise server 5 which serves as a presence server. Network presence on a server at enterprise level - including remote workers with VPN (= Virtual Private Network) connection - is checked via a login session, requiring an active device of a participant and the performance of a login.

The login 601, 603, 604, 605, 606 of each of the participants 21 to 26 may be executed when the participant 21 to 26 logs in to the telecommunication network. During the login procedure 601, 603, 604, 605, 606, each of the participants 21 to 26 may register/declare one or more of his devices to the enterprise server 5. The registered devices are indicated in the figure by the dotted border lines. The registered devices may have different capability (e.g., full multimedia, video and audio, only audio). For example, the first participant 21 registers the laptop 212 and the wireline telephone 231. The second participant 22 does not register at all, but has signed up to the collaborative session. The third participant 23 registers his PDA 231 and his mobile telephone 232. The fourth participant 24 registers his wireline telephone 242 and his laptop 244. The fifth participant 25 registers his wireline telephone 252 and his PC 253.

The participants may declare one of the registered devices as a default device. The physical presence of the participant in front of the registered devices has to be validated by a specific activity on the device, e.g., by pressing a button on the device. Even in case that no active login has been found, the collaborative scheduler 1 provides the session manager 4 with the phone number of participants to be included into that collaborative session (cf. participant 22).

As a reply to the request 802 received from the collaborative scheduler 1, the enterprise server 5 returns 802 the following information about each of the participants 21 to 26 to the collaborative scheduler 1:
1. The default declared device first, then in reverse device capability order the remaining declared devices (first devices with video and audio capability, at the end devices with audio capability, only), reflecting the progression from wide band to narrow band. Even participants 21, 22, 23 outside the enterprise premises 200 are seen in the same way (as remote workers via VPN connection) and identified by e.g. their login.
2. As for reservation, the meeting room is considered as a participant 26 and therefore the available devices (video projector, local PC, audio / video conferencing tool,...) of the meeting room are checked as well, and the best suited ones are used for the collaborative session.

If a previous meeting in the meeting room is not finished, the meeting room and its specific devices are seen as busy and the effective set-up of the collaborative session is delayed consequently.

The collaborative scheduler 1 gets availability of participants' devices from the enterprise server 5 and information 803a about the best suited device capability from the collaborative applications 31, 32, 33. The collaborative applications may be software for group collaboration over the Internet, e.g., comprising Instant Messaging and Web Conferencing. In particular, the collaborative applications may be synchronous groupware applications. The collaborative applications may be designed to facilitate communication among geographically dispersed co-workers and others. The collaborative applications may have their own directory system for authentication, but they can also plug into other LDAP-compliant directory services to provide users with single sign-on capability.

The collaborative scheduler 1 selects/specifies a telecommunication device for each of the participants 21 to 26. The selection / specification process may be executed on the basis of the capability requirements of the applications and/or the preferences of each participant.

The collaborative scheduler 1 then starts the identified appropriate collaborative applications 31, 32, 33 on the selected devices of the different participants 21 to 26 (locally or remotely). Preferably, the collaborative scheduler 1 feeds 803b the session manager 4 with the appropriate collaborative application 31, 32, 33 (audio, video, document sharing, ...) to be started on the selected devices of the different participants 21 to 26 (locally or remotely). Correspondingly, the session manager 4 launches 700 the respective applications 31, 32, 33 on the selected devices of the different participants 21 to 26.

Again, the meeting room is considered as a participant 26 with specific capabilities which are checked (availability and event functionality) in the same way by the collaborative scheduler 1.

At any moment, a participant can of course decide to withdraw from the collaborative session or kill one of the launched collaborative applications 31, 32, 33 (e.g., in an application comprising both video and audio, kill the video while keeping audio).

## Claims

1. A method of supporting a collaborative session with two or more participants (21 to 26) subscribed to a telecommunications network, each of the participants (21 to 26) having available one or more different telecommunication devices,
**characterised in that** the method comprises the steps of:
after a triggering action (801), receiving, by a collaborative scheduler (1), identifiers of the participants (21 to 26) and identifiers of one or more collaborative applications (31, 32, 33) to be used in the collaborative session;
sending, by the collaborative scheduler (1), a request (802) concerning an availability of the participants (21 to 26) to a presence server (5);
in reply to said request (802), receiving, by the collaborative scheduler (1), data specifying at least a respective telecommunication device for each of the participants (21 to 26) from the presence server (5); and
starting, by the collaborative scheduler (1), the identified collaborative applications (31, 32, 33) on one or more specified telecommunication devices of the participants (21 to 26).

2. The method of claim 1,
**characterised in that** the method further comprises the step of:
receiving, by the collaborative scheduler (1), information about a preferred capability of the participants' telecommunication devices from one or more of the collaborative applications (31, 32, 33); and
based on said information, specifying by the collaborative scheduler (1) for each of the participants (21 to 26) a telecommunications device to be used in the collaborative session.

3. The method of claim 1,
**characterised in that** the method further comprises the steps of:
receiving, by the collaborative scheduler (1), a list detailing the telecommunications devices available to each of the participants (21 to 26) in an order of preference; and
based on said list, specifying by the collaborative scheduler (1) for each of the participants (21 to 26) a telecommunications device to be used in the collaborative session.

4. The method of claim 1,
**characterised in that** the method further comprises the steps of:
allocating, by the collaborative scheduler (1), resources of the telecommunications network to a meeting room which is assigned a status of a participant (26);
receiving, by the collaborative scheduler (1), data about an availability of one or more devices in the meeting room, said one or more devices to be used in the collaborative session; and
selecting, by the collaborative scheduler (1), one or more of the available devices of the meeting room for the collaborative session.

5. The method of claim 1,
**characterised in that** the method further comprises the step of:
receiving, by the collaborative scheduler (1), a notification (801) from an appointment application (6) as said triggering action.

6. The method of claim 1,
**characterised in that** the method further comprises the steps of:
receiving, by the collaborative scheduler (1), from one of the participants (21 to 26) a logoff message to unsubscribe from one or more of the collaborative applications specified in the logoff message; and
triggered by said logoff message, terminating by the collaborative scheduler (1) the one or more specified collaborative applications on the telecommunications device of the one of the participants (21 to 26).

7. The method of claim 1,
**characterised in that** the method further comprises the step of:
transferring, by the collaborative scheduler (1), a collaborative session from a first telecommunications device of one of the participants (21 to 26) to a second telecommunications device of the participant; and
adjusting, by the collaborative scheduler (1), the operation of the one or more of the collaborative applications (31, 32, 33) in correspondence with the change of the telecommunications device.

8. A collaborative scheduler (1) for supporting a collaborative session with two or more participants (21 to 26) subscribed to a telecommunications network, each of the participants (21 to 26) having available one or more different telecommunication devices,
**characterised in that** the collaborative scheduler (1) comprises a control unit (10) adapted to receive, after a triggering action (801), identifiers of the participants (21 to 26) and identifiers of one or more collaborative applications (31, 32, 33) to be used in the collaborative session, send a request (802) concerning an availability of the participants (21 to 26) to a presence server (5), receive, in reply to said request (802), data specifying at least a respective telecommunication device for each of the participants (21 to 26) from the presence server (5), and start the identified collaborative applications (31, 32, 33) on one or more specified telecommunication devices of the participants (21 to 26).

9. The collaborative scheduler (1) of claim 8,
**characterised in that** the control unit (10) is adapted to feed a session manager (4) with address information associated with one or more of the participants (21 to 26) of the collaborative session.

10. The collaborative scheduler (1) of claim 8,
**characterised in that** the control unit (10) is adapted to integrate a remote participant (21 to 26) via a Virtual Private Network.
